# NEUE EUROPÄISCHE PATENTSCHRIFT

(11) **EP 1 543 270 B2**
(45) Veröffentlichungstag und Bekanntmachung des Hinweises auf die Entscheidung über den Einspruch: **07.11.2012**
(45) Hinweis auf die Patenterteilung: 09.08.2006
(21) Anmeldenummer: 03748036.5
(22) Anmeldetag: 16.09.2003
(51) Int. Cl.: F16P 3/14

(54) **VERFAHREN UND VORRICHTUNG ZUM ABSICHERN EINES GEFAHRENBEREICHS**
METHOD AND DEVICE FOR MAKING A HAZARDOUS AREA SAFE
PROCEDE ET DISPOSITIF POUR SECURISER UNE ZONE DE RISQUE

(30) Priorität: 24.09.2002 DE 10245720; 01.04.2003 DE 10315216
(43) Veröffentlichungstag der Anmeldung: 22.06.2005
(73) Patentinhaber: Pilz GmbH & Co. KG, 73760 Ostfildern (DE)
(72) Erfinder: WOEHLER, Christian, 72535 Heroldstatt (DE); PROGSCHA, Werner, 71083 Herrenberg (DE); KRUEGER, Lars, 89077 Ulm (DE); DOETTLING, Dietmar, 70771 Leinfelden-Echterdingen (DE); WENDLER, Martin, 70599 Stuttgart (DE)
(74) Vertreter: Duhme, Torsten
(86) Internationale Anmeldenummer: PCT/EP2003/010279
(87) Internationale Veröffentlichungsnummer: WO 2004/029502

(56) Entgegenhaltungen:
- EP-A- 1 061 487
- WO-A-02/069292
- WO-A-02/073086
- DE-A- 10 049 366
- DE-A- 19 709 799
- DE-A- 19 809 210
- DE-A- 19 938 639
- DE-A1- 10 000 287
- DE-A1- 10 138 960
- US-B1- 6 297 844
- W. MATUSIK ET AL: 'Image-Based Visual Hulls' SIGGRAPH 2000,
- U. FRANKE ET AL.: 'Real-Time Stereo Vision for Urban Traffic Scene Understanding' INTELLIGENT VEHICLES SYMPOSIUM 2000,
- FRANKE ET AL.: 'Fast Stereo Based Object Detection for Stop&Go Traffic' INTELLIGENT VEHICLES SYMPOSIUM, TOKYO 1996, Seiten 339 - 344
- A. SUPPES ET AL.: 'Robust Obstacle Detection from Stereoscopic Image Sequences Using Kalman Filtering' DAGM SYMPOSIUM 2001,
- M. WHITEHORN ET AL.: 'Stereo Vision in LHD Automation' IEEE Bd. 39, Nr. 1, Januar 2003 - Februar 2003,
- D. GAVRILA ET AL: 'A multi-sensor approach for the protection of vulnerable traffic participants-the PROTECTOR project' IEEE 2001,
- E.R. DAVIES: 'Machine vision: theory, algorithms, practicalities' ACADEMIC PRESS 1990, Seiten 375 - 377
- B. JÄHNE: 'Digitale Bildverarbeitung' SPRINGER 1997, Seiten 210 - 211
- 'Sicherheitsbezogene Teile von Steuerungen' AUSZUG AUS DER NORM EN 954-1 Seite 13
- 'Kategorien für sicherheitsbezogene Steuerungen nach EN 954-1' BIA REPORT Seiten 148 - 151
- 'Sicherheit von Maschinen, Grundbegriffe' AUSZUG AUS EN 292-2 Seite 7
- DR. S. MONTENEGRO: 'Sichere und fehlertolerante Steuerungen: Entwicklung sicherheitsrelevanter Steuerungen ,Redundanz' CARL-HANSER-VERLAG MÜNCHEN, Seiten 25 - 27

## Beschreibung

Die vorliegende Erfindung betrifft ein Verfahren zum Absichern eines Gefahrenbereichs, insbesondere des Gefahrenbereichs einer automatisiert arbeitenden Maschine, bei dem mit zumindest einer ersten und einer zweiten Bildaufnahmeeinheit zumindest zwei Bilder des Gefahrenbereichs aufgenommen werden, wobei die Bildaufnahmeeinheiten versetzt zueinander angeordnet sind, und bei dem anhand einer Szenenanalyse der Bilder Fremdobjekte in dem Gefahrenbereich detektiert werden.

Die Erfindung betrifft ferner eine Vorrichtung zum Absichern eines Gefahrenbereichs, insbesondere des Gefahrenbereichs einer automatisiert arbeitenden Maschine, mit zumindest einer ersten und einer zweiten Bildaufnahmeeinheit zum Aufnehmen von zumindest zwei Bildern des Gefahrenbereichs, wobei die Bildaufnahmeeinheiten versetzt zueinander angeordnet sind, und mit einer Auswerteeinheit, die anhand einer Szenenanalyse dieser Bilder Fremdobjekte in dem Gefahrenbereich detektiert.

Ein Verfahren und eine Vorrichtung der genannten Art sind beispielsweise aus der DE 197 09 799 A1 bekannt.

Zum Absichern von Gefahrenbereichen, insbesondere Gefahrenbereichen von Maschinen und industriellen Anlagen, werden bislang überwiegend Lichtschranken, Lichtgitter oder Laserscanner verwendet, häufig auch in Kombination mit mechanischen Absperrungen. Derartige Schutzmaßnahmen erfordern jedoch in der Regel eine recht aufwändige Installation und Justierung. Zudem sind diese Schutzmaßnahmen wenig flexibel, wenn es darum geht, die Absicherung des Gefahrenbereichs an unterschiedliche Betriebssituationen anzupassen.

Um diese Nachteile zu vermeiden, gibt es seit einiger zeit Bestrebungen, die Absicherung eines Gefahrenbereichs mit Hilfe einer Bildaufnahmeeinheit, in der Regel einer digitalen Kamera, sowie intelligenten Bildauswerteverfahren durchzuführen. Beispielhaft sei hierzu auf die DE 199 38 639 A1 verwiesen. In dieser Druckschrift ist eine Vorrichtung zur Absicherung eines Gefahrenbereichs beschrieben, bei der mit Hilfe der Bildaufnahmeeinheit und einem künstlichen, "kooperativen" Ziel eine virtuelle Barriere vor dem Gefahrenbereich erzeugt wird. Ein Durchbrechen der Barriere kann mit der Bildaufnahmeeinheit, ähnlich wie bei einer Lichtschranke, erkannt werden. Gegebenenfalls wird die Maschine, von der die Gefahr ausgeht, daraufhin abgeschaltet oder anderweitig in einen gefahrlosen Zustand versetzt.

Wenngleich diese bekannte Vorrichtung bereits wesentliche Erleichterungen bei der Installation sowie eine höhere Flexibilität als herkömmliche Lichtschranken etc. besitzt, ist es weiterhin von Nachteil, dass mit dem "kooperativen Ziel" Installationsmaßnahmen im Bereich der abzusichernden Maschine erforderlich sind.

Aus der eingangs genannten DE 197 09 799 A1 ist eine Vorrichtung mit zwei im Abstand voneinander angeordneten Bildaufnahmeeinheiten bekannt. Die von den beiden Bildaufnahmeeinheiten an eine Auswerteeinheit gelieferten Bilder werden einer Stereobildanalyse unterzogen, um ein dreidimensionales Abbild des Gefahrenbereichs zu erhalten. Das dreidimensionale Abbild wird anschließend mit einem dreidimensionalen Referenzmodell verglichen, um Fremdobjekte, d.h. sich unzulässigerweise in dem Gefahrenbereich befindliche Objekte, zu detektieren. Bei praktischen Versuchen mit einer vergleichbaren Anordnung hat sich jedoch gezeigt, dass die Erkennungssicherheit, mit der Fremdobjekte in dem Gefahrenbereich detektiert werden können, nicht ausreichend ist. Dies gilt zumindest so weit, wie eine entsprechende Vorrichtung zur Absicherung des Gefahrenbereichs von automatisiert arbeitenden Maschinen und dergleichen in industriellen Bereichen, d.h. zum Schutz von Personen, eingesetzt werden soll. Für eine solche Anwendung sind extrem kurze Reaktionszeiten (im Bereich von 30 ms) und eine praktisch einhundertprozentige Erkennungssicherheit erforderlich.

Eine vergleichbare Vorrichtung und ein entsprechendes Verfahren sind ferner aus der EP 1 061 487 A1 bekannt, wobei hinsichtlich der Nachteile das bereits Gesagte gilt.

Aus der DE 198 09 210 A1 sind eine Vorrichtung und ein Verfahren zum Überwachen einer sogenannten Szene bekannt. Die Szene wird mit einer einzelnen Bildaufnahmeeinheit aufgenommen und mit einem Referenzbild verglichen. Einzelne Punkte innerhalb der Szene werden mit Hilfe einer Lichtquelle gezielt beleuchtet, um bei der Bildaufnahme eine Markierung oder Individualisierung zu erhalten. Dieses Verfahren besitzt jedoch den Nachteil, dass durch die Beleuchtung der Szene, im konkreten Anwendungsfall also des Gefahrenbereichs, eine Störanfälligkeit durch Fremdlichteinstreuung gegeben ist. Störungen durch Fremdlicht können insbesondere in industriellen Produktionsumgebungen auftreten, beispielsweise bei Schweißrobotern oder bei großen Abkantpressen.

Vor diesem Hintergrund ist es eine Aufgabe der vorliegenden Erfindung, ein alternatives Verfahren und eine entsprechende Vorrichtung anzugeben, mit denen insbesondere der Gefahrenbereich einer automatisiert arbeitenden Maschine ohne großen Installationsaufwand, jedoch mit hinreichender Zuverlässigkeit abgesichert werden kann.

Diese Aufgabe wird mit einem Verfahren nach Anspruch 1 gelöst.

Die Aufgabe wird des Weiteren durch eine Vorrichtung nach Anspruch 10 gelöst.

Die erfindungsgemäße Lösung basiert damit im Kern auf der dreidimensionalen Auswertung von mindestens zwei Bildern, die mit zueinander versetzten Bildaufnahmeeinheiten von dem Gefahrenbereich aufgenommen werden. Entsprechende Szenenanalyseverfahren sind im Stand der Technik für sich genommen bekannt. Beispielsweise sei auf das Buch "Three-Dimensional Computer Vision: A Geometric Viewpoint", von Olivier Faugeras, MIT-Press, Cambridge oder auf den Artikel "Fast Stereo Based Object Detection for Stop & Go Traffic", von U. Franke/I. Kutzbach, INTELLIGENT VEHICLES SYMPOSIUM, Seiten 339-344, Tokio, 1996 verwiesen. Ein entsprechendes Verfahren wird auch in der nachveröffentlichten Patentanmeldung DE 102 59 698-53 beschrieben. Die bislang bekannten Verfahren liefern für sich genommen jedoch nicht die erforderliche Erkennungssicherheit, um die Absicherung des Gefahrenbereichs einer automatisiert arbeitenden Maschine zuverlässig zu gewährleisten. Es hat sich nun jedoch überraschenderweise gezeigt, dass die Kombination verschiedener dreidimensionalen Szenenanalyseverfahren, die parallel nebeneinander ausgeführt werden, das Erreichen der für diesen Anwendungszweck erforderlichen Erkennungssicherheit ermöglicht.

Mit Hilfe der getrennten Szenenanalyseverfahren werden Objekte in den beiden aufgenommenen Bildern detektiert, und es wird deren räumliche Position bestimmt. Anschließend wird anhand der räumlichen Position der Objekte überprüft, ob diese sich in dem überwachten Gefahrenbereich befinden und ob es sich dabei um "Fremdobjekte" handelt. Zusätzliche externe Hilfsmittel, wie beispielsweise ein kooperatives Ziel oder eine gezielte Markierung einzelner Punkte des aufgenommenen Gefahrenbereichs mit Licht, sind nicht erforderlich. Die erfindungsgemäße Lösung ermöglicht damit einen geringen Installationsaufwand. Des weiteren ermöglichen die neue Vorrichtung und das entsprechende Verfahren aufgrund der zahlreichen Varianten moderner Auswertesysteme eine große Flexibilität.

Die verschiedenen Szenenanalyseverfahren, die heute bereits zur Verfügung stehen, besitzen jeweils individuelle Stärken und Schwächen, insbesondere im Hinblick auf die Erkennungssicherheit und Störanfälligkeit. Durch Kombination verschiedener Verfahren lassen sich die jeweiligen Schwächen kompensieren. Sobald auch nur eines der Szenenanalyseverfahren eine Fremdobjektdetektion liefert, wird der Gefahrenbereich abgesichert, beispielsweise also die überwachte Maschine abgeschaltet oder anderweitig in Ruhezustand versetzt. Die an sich hohen Anforderungen, die an Schutzeinrichtungen für die Maschinensicherheit gestellt werden, lassen sich so überraschend einfach erreichen.

Darüber hinaus besitzt die neue Vorrichtung den Vorteil, dass durch die Verwendung unterschiedlicher Verfahren zur Szenenanalyse zwangsläufig eine Diversität geschaffen wird. Damit ist die Eigenfehlersicherheit der Gesamtvorrichtung gegenüber Funktionsausfällen und Störungen reduziert. Dies ist vor allem im Hinblick auf den bevorzugten Anwendungsbereich, nämlich zur Absicherung von Maschinen und Anlagen, von großer Bedeutung.

Die genannte Aufgabe ist daher vollständig gelöst.

Unter Stereobildverarbeitung wird hier verstanden, dass zwei Kameras mit annähernd parallelen optischen Achsen und annähernd identischer Brennweite verwendet werden. Es wird herbei eine Disparitätskarte (3-D-Punktewolke) bestimmt, indem ein Pixel im linken Bild einem Pixel im rechten Bild zugeordnet wird, dies im allgemeinen basierend auf einer kleinen lokalen Umgebung der jeweiligen Pixel.

Demgegenüber versteht man unter einer dreidimensionalen Szenenanalyse ein Verfahren, bei welchem Objektparameter so adaptiert werden, dass eine Optimierung der Parameter anhand einer Zielfunktion erfolgt, die simultan anhand mindestens zweier Bilder des Objekts ermittelt wird (beispielsweise: Matusik et al., "Image-Based Visual Hulls", SIGGRAPH 2000 oder die nachveröffentlichte Patentanmeldung DE 102 59 698-53). Die Erkennungssicherheit wird gegenüber üblichen Stereobildverarbeitungsverfahren gesteigert, da hier die Erkennung auf einer Ebene mit höherem Informationsgehalt erfolgt.

In einer Ausgestaltung der Erfindung werden das erste und das zweite Bild einerseits einer korrelationsbasierten Szenenanalyse und andererseits einer konturbasierten Szenenanalyse unterzogen.

Eine korrelationsbasierte Szenenanalyse im Sinne der Erfindung ist beispielsweise aus dem bereits erwähnten Artikel von Franke/Kutzbach oder einem weiteren Artikel mit dem Titel "Real-Time Stereo Vision for Urban Traffic Scene Understanding" von U. Franke/A. Joos, IEEE INTELLIGENT VEHICLES SYMPOSIUM, 2000 bekannt.

Eine konturbasierte Szenenanalyse ist beispielsweise aus der Veröffentlichung von Matusik oder der bereits erwähnten nachveröffentlichten Patentanmeldung DE 102 59 698-53 bekannt. Wie sich bei praktischen Versuchen gezeigt hat, liefert die Kombination der genannten Verfahren zur Szenenanalyse besonders gute Ergebnisse im Hinblick auf die Erkennungssicherheit und ferner auch im Hinblick auf die Eigenfehlersicherheit der Gesamtvorrichtung.

In einer weiteren Ausgestaltung der Erfindung werden bei zumindest einem der Szenenanalyseverfahren nur solche Bereiche in Bildern bearbeitet, die sich signifikant von einem Referenzbild unterscheiden.

Diese Maßnahme hat sich für den bevorzugten Anwendungsbereich der Erfindung als besonders vorteilhaft erwiesen, da hierdurch die Verarbeitungsgeschwindigkeit gesteigert werden kann. Dementsprechend lassen sich die Reaktionszeiten der Vorrichtung verkürzen, was einerseits eine größere Flexibilität bei der Gestaltung von Schutzzonen und andererseits einen besseren Schutz von Bedienpersonal ermöglicht.

Bei einer einfachen Ausgestaltung des Verfahrens wird lediglich ein Bildpaar erzeugt, an welchem die zwei Szenenanalyseverfahren durchgeführt werden. Diese Ausgestaltung hat den Vorteil, dass sie apparativ einfach realisierbar ist. Unter ungünstigen Bedingungen kann sich jedoch als nachteilig auswirken, dass für Strukturen im Bild, die entlang der Verbindungslinie der zwei Bildaufnahmeeinheiten ausgerichtet sind, eine dreidimensionale Analyse nicht möglich ist.

Um auch solche Strukturen dreidimensional erfassen zu können, ist es von Vorteil, mit mindestens einer weiteren Bildaufnahmeeinheit mindestens ein weiteres Bild der Szene aufzunehmen. Diese weiteren Bildaufnahmeeinheiten sollen dabei nicht auf einer Linie mit den ersten beiden Bildaufnahmeeinheiten liegen.

Um die Vorrichtung apparativ einfach zu halten, ist es von Vorteil, wenn drei aufgenommene Bilder der Szene als zwei Bildpaare aufgefasst werden, wobei das erste und das zweite Bildpaar jeweils ein Bild gemeinsam haben. Dieses Vorgehen lässt sich entsprechend auch auf die Verwendung von mehr als drei Bildern ausdehnen.

Ein besonders hohes Maß an Sicherheit wird erreicht, wenn auf jedes Bildpaar mehrere Szenenanalyseverfahren angewendet werden.

In einer besonders vorteilhaften Ausgestaltung verfügt die erfindungsgemäße Vorrichtung über wenigstens eine dritte Bildaufnahmeeinheit zum Aufnehmen eines dritten Bildes des Gefahrenbereichs. Hierbei ist die Auswerteeinheit so eingerichtet, dass wenigstens eines der zwei Szenenanalyseverfahren auf die wenigstens drei Bilder angewandt wird. Durch die Auswahl eines einzigen der zwei möglichen Verfahren zur Szenenanalyse wird die notwendige Rechenleistung und Rechenzeit gesenkt.

In einer weiteren Ausgestaltung werden mehrere zeitlich aufeinanderfolgende Gruppen von mindestens zwei synchron aufgenommenen Bildern ausgewertet, um zumindest einen Bewegungsparameter eines detektierten Fremdobjektes zu bestimmen, insbesondere Geschwindigkeit, Bewegungsrichtung etc.

Durch diese Maßnahme lässt sich der Gefährdungsgrad, der von der überwachten Maschine oder dergleichen ausgeht, genauer einschätzen. Infolgedessen ist eine intelligentere Reaktion auf ein erkanntes Fremdobjekt möglich. Beispielsweise kann bei einem sich nur langsam bewegenden Fremdobjekt innerhalb des Gefahrenbereichs zunächst eine Vorwarnung erzeugt werden, während bei einem sich schnell bewegenden Fremdobjekt die überwachte Maschine unmittelbar abgeschaltet wird.

In einer weiteren Ausgestaltung wird eine zukünftige Belichtungszeit der Bildaufnahmeeinheiten in Abhängigkeit von den aktuellen Bildern eingestellt.

Durch diese Maßnahme wird die Belichtungszeit der Bildaufnahmeeinheiten adaptiv an wechselnde Umgebungsbedingungen angepasst. Die neue Vorrichtung kann damit automatisch auf veränderte Umgebungsbedingungen, beispielsweise Tageslichteinflüsse, reagieren. Einerseits wird dadurch die Erkennungssicherheit gesteigert, andererseits lassen sich unerwünschte Fehlalarme besser vermeiden.

In einer weiteren Ausgestaltung der Erfindung sind wenigstens zwei der Bildaufnahmeeinheiten in einem gemeinsamen Gerätegehäuse angeordnet.

Diese Ausgestaltung besitzt den Vorteil, dass ein Großteil der erforderlichen Kalibrierungsarbeiten sowie die relative Justierung der beiden Bildaufnahmeeinheiten zueinander herstellerseitig im Werk vorgenommen werden können. Der Installationsaufwand der erfindungsgemäßen Vorrichtung vor Ort wird dadurch noch weiter vereinfacht. Außerdem wird durch eine präzise Kalibrierung unter Laborbedingungen die Erkennungssicherheit der Gesamtvorrichtung weiter gesteigert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein vereinfachtes Blockschaltbild einer erfindungsgemäßen Vorrichtung;
- Fig. 2: ein vereinfachtes Flussdiagramm zur Erläuterung des erfindungsgemäßen Verfahrens;
- Fig. 3: eine Skizze zur Erläuterung einer bevorzugten Anwendung der erfindungsgemäßen Vorrichtung;
- Fig. 4: eine Abwandlung der in Fig. 3 gezeigten Anwendung; und
- Fig. 5: ein an die Abwandlung der Fig. angepasstes Flussdiagramm des erfindungsgemäßen Verfahrens.

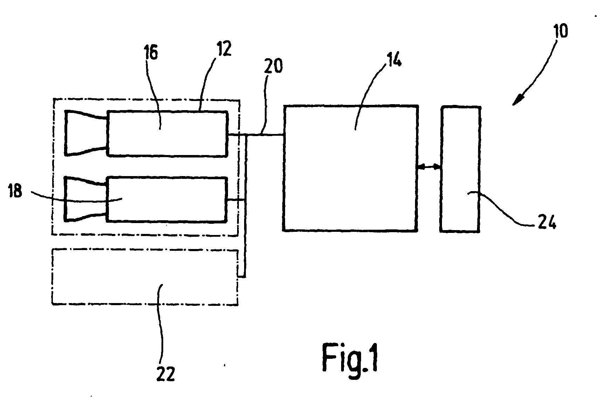

In Fig.1 ist eine erfindungsgemäße Vorrichtung in ihrer Gesamtheit mit der Bezugsziffer 10 bezeichnet.

Die Vorrichtung 10 beinhaltet im Wesentlichen ein Kameramodul 12 und eine Auswerteeinheit 14. Innerhalb des Kameramoduls 12 sind zwei Bildaufnahmeeinheiten 16, 18 dargestellt (dort als "Kamera 1" und "Kamera 2" bezeichnet). Die Bildaufnahmeeinheiten 16, 18 können komplette, eigenständig funktionsfähige Kameras sein. Alternativ hierzu können einzelne Teile der beiden Kameras jedoch auch gemeinsam genutzt sein, so dass es sich dann im Wesentlichen um zwei getrennte Bildsensoren, gegebenenfalls mit jeweils zugehöriger Optik, handelt.

Die Bildaufnahmeeinheiten 16, 18 sind über einen Bus 20 mit der räumlich etwas abgesetzten Auswerteeinheit 14 verbunden. Alternativ hierzu ist es auch möglich, die beiden Bildaufnahmeeinheiten 16, 18 und die Auswerteeinheit 14 in einem gemeinsamen Gehäuse zu integrieren oder eine sonstige analoge oder digitale Schnittstelle zu verwenden. Die vorliegend dargestellte Anordnung mit einer räumlich getrennten Auswerteeinheit 14 besitzt die Vorteile eines modularen Systems, wie geringeres Gewicht der Einzelkomponenten, separate Austauschbarkeit etc. Außerdem kann auf diese Weise sehr einfach ein weiteres Kameramodul 22, hier nur schematisch dargestellt, an die gleiche Auswerteeinheit 14 angeschlossen werden.

Mit der Bezugsziffer 24 ist eine Schaltvorrichtung bezeichnet, die beispielsweise Relais oder Schütze beinhaltet. Mit der Schaltvorrichtung können die Antriebe einer überwachten Maschine, Anlage und dergleichen in an sich bekannter Weise abgeschaltet werden. Die Schaltvorrichtung 24 kann beispielsweise auch in Form einer fehlersicheren SPS (Speicher Programmierbaren Steuerung), d.h. einer sogenannten Sicherheitssteuerung, realisiert sein. In diesem Fall ist es bevorzugt, wenn die Auswerteeinheit 14 über einen sicheren Feldbus, beispielsweise den sogenannten SafetyBus® der Pilz GmbH & Co., Deutschland, mit der Sicherheitssteuerung verbunden ist. Bei der Sicherheitssteuerung handelt es sich beispielsweise um eine PSS 3000 der Firma Pilz GmbH & Co.

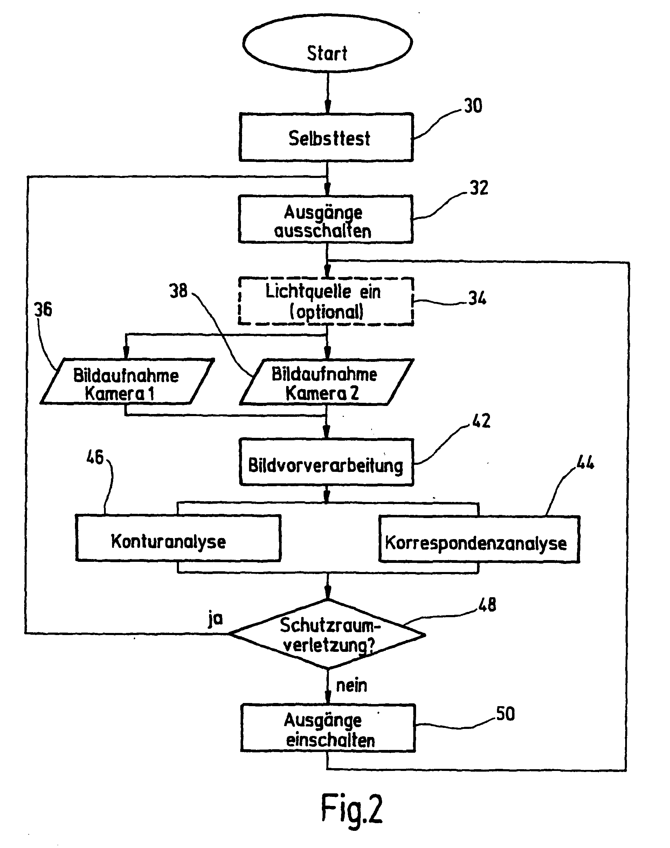

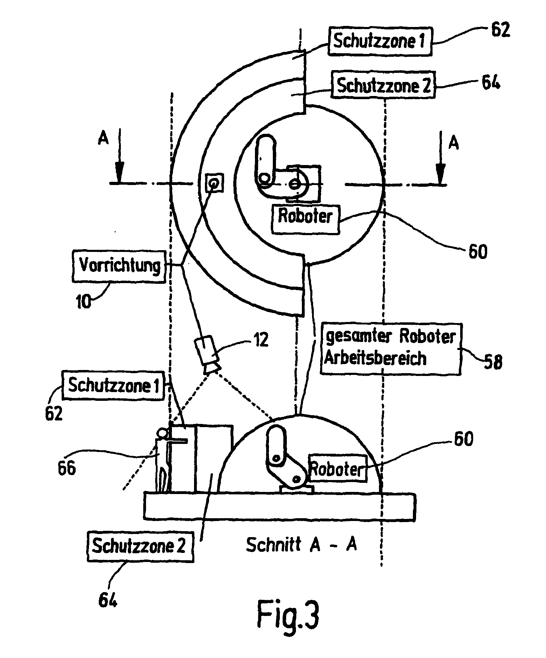

Die grundsätzliche Funktionsweise der Vorrichtung 10 sowie ein bevorzugtes Anwendungsbeispiel werden nachfolgend anhand der Fig. 2 und 3 beschrieben. Gleiche Bezugszeichen bezeichnen dabei jeweils gleiche Elemente.

Nach dem Einschalten der Vorrichtung 10 führt diese gemäß Schritt 30 zunächst einen Selbsttest durch, um die einwandfreie Funktion zu überprüfen. Im Rahmen des Selbsttests werden unter anderem die einzelnen Komponenten der Auswerteeinheit 14 sowie der Bildaufnahmeeinheiten 16, 18 auf einwandfreie Funktion hin überprüft. Gemäß Schritt 32 werden dann die Ausgänge der Schaltvorrichtung 24 ausgeschaltet, d.h. eine überwachte Maschine wird zuverlässig in einen definierten, sicheren Zustand gebracht.

Gemäß Schritt 34, der optional ist, wird eine Lichtquelle als Zusatzbeleuchtung eingeschaltet. Dies geschieht insbesondere dann, wenn die vorhandene Umgebungshelligkeit für die Durchführung der nachfolgenden Bildauswertung nicht ausreichend ist.

Gemäß den Schritten 36, 38 wird der überwachte Gefahrenbereich von den Bildaufnahmeeinheiten 16, 18 aufgenommen. Anders ausgedrückt liefert die Bildaufnahmeeinheit 16 ein erstes und die Bildaufnahmeeinheit 18 ein zweites Bild des Gefahrenbereichs. Gemäß dem hier dargestellten Ausführungsbeispiel erfolgt dies parallel, d.h. mit zueinander synchronisierten Bildaufnahmeeinheiten 16, 18.

Nach Schritt 42 erfolgt anschließend eine sogenannte Bildvorverarbeitung. Je nach Anwendungsfall werden hier an sich bekannte Verfahren zur Aufbereitung der aufgenommenen Bilder durchgeführt, beispielsweise eine FPN-Korrektur (Fixed Pattern Noise). Des Weiteren werden die aufgenommenen ersten und zweiten Bilder im Hinblick auf Grundhelligkeiten etc. aneinander angepasst.

Gemäß den Schritten 44, 46 erfolgt anschließend die Auswertung des aus dem ersten und dem zweiten Bild bestehenden Bildpaars mit Hilfe von zwei verschiedenen Szenenanalyseverfahren, um Fremdobjekte innerhalb des Gefahrenbereichs zu detektieren. Im Schritt 44 werden das erste und zweite Bild des Gefahrenbereichs einer korrelationsbasierten Bildanalyse unterzogen. Im Schritt 46 erfolgt hingegen eine konturbasierte Bildanalyse.

In einem besonders bevorzugten Ausführungsbeispiel beinhaltet die konturbasierte Bildanalyse eine Regionensegmentierung, d.h. die Einteilung des ersten und zweiten Bildes in einzelne zu vergleichende Bereiche. Bevorzugt werden dann nur Bereiche ausgewertet, die sich von einem Referenzbild signifikant unterscheiden.

Alternativ kann in anderen Ausführungsbeispielen jedoch auch ein Algorithmus verwendet werden, wie er beispielsweise in der EP 1 061 487 A1 oder in Matusik et al., "Image-Based Visual Hulls", SIGGRAPH 2000 beschrieben ist. Für die korrelationsbasierte Bildanalyse wird bevorzugt ein Algorithmus verwendet, wie er in den oben zitierten Artikeln von U. Franke beschrieben ist. Grundsätzlich kommen hier jedoch auch andere Szenenanalyseverfahren in Betracht.

Im Schritt 48 wird anhand der Ergebnisse aus den beiden Szenenanalysen entschieden, ob eine Schutzraumverletzung vorliegt, d.h. ob ein Objekt unzulässigerweise in den überwachten Gefahrenbereich eingedrungen ist. Ist dies nicht der Fall, werden gemäß Schritt 50 die Ausgänge der Schaltvorrichtung 24 eingeschaltet, d.h. die überwachte Maschine wird in Betrieb genommen.

Wurde eine Schutzraumverletzung durch ein Fremdobjekt detektiert, verzweigt das Verfahren zum Schritt 32, wonach die Ausgänge der Schaltvorrichtung ausgeschaltet werden (oder bleiben, wenn bereits im vorherigen Verfahrensdurchlauf ein Fremdobjekt detektiert wurde). Die überwachte Maschine etc. wird hierdurch in ihrer sicheren Ruheposition gehalten. Es versteht sich, dass die Schritte 34 bis 50 rekursiv wiederholt werden, um im Betrieb der Vorrichtung 10 eine kontinuierliche Absicherung des Gefahrenbereichs zu gewährleisten.

Im oberen Teil der Fig. 3 ist ein bevorzugter Anwendungsfall der neuen Vorrichtung 10 in einer Draufsicht dargestellt, während im unteren Teil die zugehörige Seitenansicht gezeigt ist.

Die Vorrichtung 10 dient hier zur Absicherung des Gefahrenbereichs 58, der von einem automatisiert arbeitenden Roboter 60 ausgeht. Der Gefahrenbereich 58 liegt hier innerhalb einer halbkugelförmigen Hüllfläche um den Roboter 60 und entspricht seinem Bewegungs- oder Arbeitsbereich. Das Kameramodul 12, das die zwei Bildaufnahmeeinheiten 16, 18 in einem gemeinsamen Gehäuse enthält, ist oberhalb des Gefahrenbereichs angeordnet und auf diesen ausgerichtet.

Mit den Bezugsziffern 62 und 64 sind zwei gestaffelte Schutzzonen bezeichnet, wobei die Schutzzone 62 hier eine Art Warnzone bildet, während die Schutzzone 64 einen echten Verbotsbereich bildet. Tritt ein Fremdobjekt 66 in die Schutzzone 62 ein, wird dies von der Vorrichtung 10 aufgrund der Szenenanalyseverfahren 44, 46 detektiert. In einem Ausführungsbeispiel schaltet die Auswerteeinheit 14 den Roboter 60 dann in einen Betrieb mit reduzierter Geschwindigkeit. Erst bei Verletzung der Schutzzone 64 erfolgt ein Not-Aus des Roboters 60.

In einem weiteren Ausführungsbeispiel wird bei Verletzung der Schutzzone 62 der Roboter 60 in eine sichere Ruheposition gefahren, von wo aus der Roboter 60 einen Neustart aufnehmen kann, sobald die Vorrichtung 10 erkennt, dass die Schutzzone 62 nicht mehr verletzt ist. Wird hingegen die Schutzzone 64 verletzt, ist ein Neustart von Hand erforderlich.

Der Gefahrenbereich 58 und die Schutzzonen 62, 64 sind hier jeweils mit kreisabschnittsförmigen Hüllkurven dargestellt. In einem Ausführungsbeispiel werden der Gefahrenbereich 58 und die Schutzzonen 62, 64 jedoch adaptiv an die Bewegungen und Arbeitszustände des Roboters 60 angepasst. Es beinhalten die beiden Szenenanalyseverfahren 44, 46 dabei Zusatzalgorithmen, mit deren Hilfe Parameter des Fremdobjekts 66, beispielsweise seine Form, seine Bewegungsrichtung und -geschwindigkeit, identifiziert und verfolgt werden können. In Abhängigkeit davon werden die Schutzzonen 62, 64 adaptiv so um den Roboter 60 herum definiert, dass ohne Gefährdung des Fremdobjektes 66 ein "enges" Nebeneinander mit dem Roboter 60 möglich ist. Bei dieser Ausführung ist es beispielsweise möglich, mehrere Roboter 60 auf engem Raum nebeneinander anzuordnen, wobei mit Hilfe der Vorrichtung 10 Kollisionen untereinander verhindert werden. Ferner können in einem weiteren Ausführungsbeispiel Werkstücke (hier nicht dargestellt), die dem Roboter 60 zugeführt werden, von "unbefugten" Fremdobjekten unterschieden werden. Die Arbeitsweise des Roboters 60 kann auf diese Weise optimiert werden, während gleichzeitig die Sicherheit von beteiligtem Bedienpersonal gewährleistet ist.

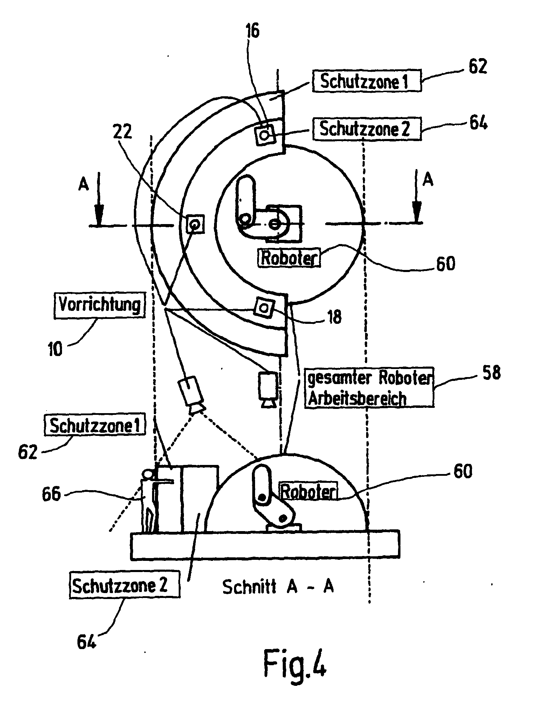

Fig. 4 zeigt eine Abwandlung des Anwendungsfalles aus Fig. 3. Anstelle eines einzelnen Kameramoduls wie im Falle der Fig. 3 sind hier drei Bildaufnahmeeinheiten 16, 18, 22 jeweils voneinander beabstandet oberhalb des Roboters 60 und seiner Schutzzonen 62, 64 angeordnet. Die Bildaufnahmeeinheiten 16, 18, 22 haben extrem weitwinklige Objektive, so dass sie die Schutzzonen 62, 64 vollständig erfassen können, selbst wenn sie nur in geringer Höhe über diesen angeordnet sind.

Insbesondere kann es sich bei den Bildaufnahmeeinheiten 16, 18, 22 um katadioptrische Kameras handeln, das heißt um Kameras, die gewölbte Spiegel als bildgebende Elemente einsetzen und ein ringförmiges Blickfeld rings um einen in Verlängerung ihrer optischen Achse liegenden toten Winkel haben. Wenn diese Kameras mit ihrer optischen Achse auf den Roboter 60 ausgerichtet sind, können sie zwar den Roboter selbst nicht erfassen, doch überlappt ihr Blickfeld gut mit den ringförmigen Schutzzonen 62, 64 rings um den Gefahrenbereich 58. Da die katadioptrischen Kameras somit jedes Fremdobjekt auf seinem Weg in den Gefahrenbereich 58 erkennen können, ist es nicht nachteilig, dass der Gefahrenbereich 58 selbst sich weitgehend mit ihren toten Winkeln überschneidet. Für die Überwachung kann dies vielmehr eine Vereinfachung bedeuten, da die Auswerteeinheit 14, wenn sie den Roboter nicht wahrnimmt, auch nicht dessen Bewegungen von eventuellen Bewegungen eines Fremdobjektes unterscheiden muss, um Letzteres zu erkennen.

Die drei Kameras 16, 18, 22 sind so angeordnet, dass jeweils die Verbindungslinie zwischen zwei Kameras im Blickfeld der dritten liegt. Die Position eines Fremdobjektes auf einer solchen Verbindungslinie ist daher stets erfassbar anhand von Bildern, die von der dritten Kamera und einer der zwei auf der Verbindungslinie liegenden Kameras geliefert werden.

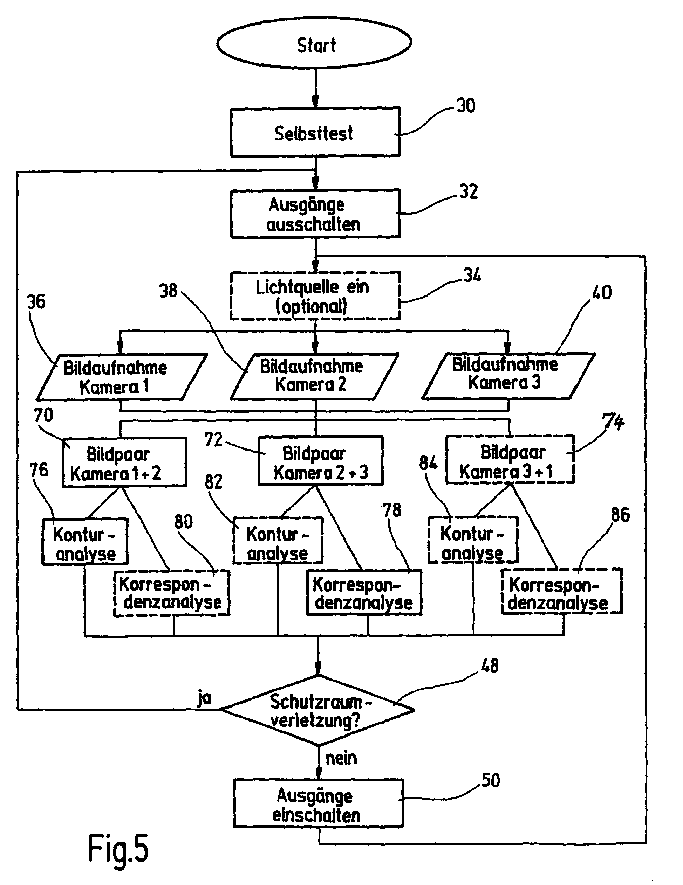

Die Arbeitsweise der Vorrichtung aus Fig. 4 wird mit Bezug auf das Flussdiagramm der Fig. 5 beschrieben. Die Verfahrensschritte 30, 32, 34, 36, 38 sind identisch mit den bereits mit Bezug auf Fig. 2 beschriebenen und werden daher nicht erneut erläutert. Zusätzlich zu den zwei Bildaufnahmeschritten 36, 38 durch Kamera 1 und Kamera 2 findet ein dritter Bildaufnahmeschritt 40 durch die Kamera 3 statt. Es liegen somit drei gleichzeitig aus verschiedenen Blickwinkeln aufgenommene Bilder vor, die in unterschiedlicher Weise zu Bildpaaren kombiniert werden können. Es werden mindestens zwei unterschiedliche Bildpaare benötigt, die in den Schritten 70, 72 aus den von den Kameras 1 und 2 bzw. Kameras 2 und 3 aufgenommenen Bildern zusammengestellt werden. Fakultativ kann in Schritt 74 ein drittes Bildpaar aus den Bildern der Kameras 3 und 1 zusammengestellt werden.

Auf die so erhaltenen wenigstens zwei Bildpaare werden zwei verschiedene Szenenanalyseverfahren angewendet. Im einfachsten Fall kann man sich zum Beispiel darauf beschränken, in Schritt 76 eine Konturanalyse am Bildpaar der Kameras 1 und 2 und in Schritt 78 eine Korrespondenzanalyse am Bildpaar der Kameras 2 und 3 durchzuführen. Ein höheres Maß an Erkennungssicherheit wird erreicht, wenn beide Analyseverfahren jeweils an beiden Bildpaaren durchgeführt werden (Schritte 80, 82), und wenn, falls der Schritt 74 durchgeführt worden ist, auch dessen Bildpaar einer Konturanalyse 84 und einer Korrespondenzanalyse 86 unterzogen wird.

Die auf die Szenenanalyse folgenden Schritte 48, 50 sind wiederum analog zu denen aus Fig. 2, das heißt in Schritt 48 wird anhand der Ergebnisse der vorhergegangenen zwei, vier oder sechs Szenenanalysen entschieden, ob eine Schutzraumverletzung vorliegt. Falls dies der Fall ist, werden die Ausgänge der Schaltvorrichtung 24 ausgeschaltet, anderenfalls werden sie in Schritt 50 eingeschaltet, das heißt die überwachte Maschine wird in Betrieb genommen, oder falls die betreffende Maschine bereits in Betrieb ist, bleiben die Ausgänge eingeschaltet.

Es liegt auf der Hand, dass die Konturanalyse und die Korrespondenzanalyse durch beliebige andere Szenenanalyseverfahren ersetzt werden können, oder dass auch mehr als zwei unterschiedliche Szenenanalyseverfahren an einem einzelnen Bildpaar durchgeführt werden können, um die Erkennungssicherheit einer Schutzraumverletzung weiter zu verbessern.

Des Weiteren können Verfahren der Szenenanalyse verwendet werden, die keine Einteilung der Bilder der Szene in Bildpaare vornehmen, sondern statt dessen eine dreidimensionale Beschreibung der Szene durch Minimierung aus einer aus allen Bildern simultan zu bestimmenden Zielfunktion ermitteln. Solche Algorithmen sind beispielsweise in der nachveröffentlichten Patentanmeldung DE 102 59 698-53 oder in der oben zitierten Veröffentlichung von Matusik et. al. beschrieben. Zur Erhöhung der Erkennungssicherheit und der Erzielung eines diversitären Systems sind vorzugsweise diese beiden Algorithmen auf alle Bilder gemeinsam anzuwenden.

## Patentansprüche

1. Verfahren zum Absichern eines Gefahrenbereichs (58) eines Roboters (60), bei dem mit zumindest einer ersten und einer zweiten Bildaufnahmeeinheit (16, 18) zumindest zwei Bilder des Gefahrenbereichs (58) aufgenommen werden, wobei die Bildaufnahmeeinheiten (16, 18) versetzt zueinander angeordnet sind, und bei dem anhand einer Szenenanalyse (44, 46) der Bilder Fremdobjekte (66) in dem Gefahrenbereich (58) detektiert werden, **dadurch gekennzeichnet, dass** die Szenenanalyse anhand der mindestens zwei Bilder unter Anwendung mindestens zweier algorithmisch unterschiedlicher dreidimensionaler Szenenanalyseverfahren (46, 44) durchgeführt wird, die jeweils anhand der mindestens zwei Bilder parallel nebeneinander ausgeführt werden, so dass eine Kombination verschiedener dreidimensionaler Szenenanalyseverfahren vorliegt, dass in dem Gefahrenbereich (58) eine Warnzone (62) und eine Schutzzone (64) definiert ist, und dass der Gefahrenbereich (58) abgesichert wird, wenn zumindest eines der dreidimensionalen Szenenanalyseverfahren (44, 46) eine Fremdobjektdetektion in der Warnzone (62) oder Schutzzone (64) liefert, wobei die beiden dreidimensionalen Szenenanalyseverfahren (44, 46) Zusatzalgorithmen beinhalten, mit deren Hilfe eine Bewegungsrichtung und Geschwindigkeit eines Fremdobjekts (66) identifiziert werden können, und wobei die warnzone (62) und die Schutzzone (64) in Abhängigkeit davon adaptiv um den Roboter (60) herum definiert werden.

2. Verfahren nach Anspruch 1, **dadurch gekennzeichnet, dass** eines der Verfahren (46, 44) zur Szenenanalyse eine korrelationsbasierte Szenenanalyse (44) und das andere eine konturbasierte Szenenanalyse (46) umfasst.

3. Verfahren nach Anspruch 2, **dadurch gekennzeichnet, dass** bei zumindest einem der Verfahren (46, 44) nur solche Bildbereiche bearbeitet werden, die sich signifikant von einem Referenzbild unterscheiden.

4. Verfahren nach einem der Ansprüche 1 bis 3, **dadurch gekennzeichnet, dass** die Bilder der Szene von wenigstens drei Bildaufnahmeeinheiten (16, 18, 22) aufgenommen werden, welche nicht auf einer Linie angeordnet sind.

5. Verfahren nach Anspruch 4, **dadurch gekennzeichnet, dass** die wenigstens drei Bilder als mindestens zwei Bildpaare aufgefasst werden, die jeweils ein Bild gemeinsam haben.

6. Verfahren nach einem der vorhergehenden Ansprüche, **dadurch gekennzeichnet, dass** beide Szenenanalyseverfahren auf alle Bilder angewendet werden.

7. Verfahren nach einem der vorhergehenden Ansprüche, **dadurch gekennzeichnet, dass** mehrere zeitlich aufeinanderfolgende Gruppen von mindestens zwei Bildern ausgewertet werden, um zumindest einen Bewegungsparameter eines detektierten Fremdobjektes zu bestimmen.

8. Verfahren nach einem der vorhergehenden Ansprüche, **dadurch gekennzeichnet, dass** eine zukünftige Belichtungszeit jeder Bildaufnahmeeinheit (16, 18, 22) in Abhängigkeit von dem von ihr aufgenommenen Bild eingestellt wird.

9. Verfahren nach einem der vorhergehenden Ansprüche, **dadurch gekennzeichnet, dass** eine dreidimensionale Beschreibung der Szene durch Minimierung aus einer aus allen Bildern simultan zu bestimmenden Zielfunktion ermittelt wird.

10. Vorrichtung zum Absichern eines Gefahrenbereichs (58) eines Roboters (60), mit zumindest einer ersten und einer zweiten Bildaufnahmeeinheit (16, 18) zum Aufnehmen von zumindest zwei Bildern des Gefahrenbereichs (58), wobei die Bildaufnahmeeinheiten (16, 18) versetzt zueinander angeordnet sind, und mit einer Auswerteeinheit (14), die an Hand einer Szenenanalyse (44, 46) dieser Bilder Fremdobjekte (66) in dem Gefahrenbereich (58) detektiert, **dadurch gekennzeichnet, dass** die Auswerteeinheit (14) so ausgebildet ist, dass die Szenenanalyse unter Anwendung mindestens zweier algorithmisch unterschiedlicher dreidimensionaler Szenenanalyseverfahren (46, 44) durchgeführt wird, die jeweils anhand der mindestens zwei Bilder parallel nebeneinander ausgeführt werden, so dass eine Kombination verschiedener dreidimensionaler Szenenanalyseverfahren vorliegt, dass in dem Gefahrenbereich (58) eine Warnzone (62) und eine Schutzzone (64) definiert ist, und dass ferner ein Schaltmittel (24) implementiert ist, das aktiviert wird, wenn zumindest eines der dreidimensionalen Szenenanalyseverfahren (44, 46) eine Fremdobjektdetektion in der Warnzone (62) oder Schutzzone ( 64) liefert, wobei die beiden dreidimensionalen Szenenanalyseverfahren (44, 46) Zusatzalgorithmen beinhalten, mit deren Hilfe eine Bewegungsrichtung und Geschwindigkeit eines Fremdobjekts (66) identifiziert werden können, und wobei die warnzone (62) und die Schutzzone (64) in Abhängigkeit davon adaptiv um den Roboter (60) herum definiert werden.

11. Vorrichtung nach Anspruch 10, **dadurch gekennzeichnet, dass** die Auswerteeinheit (14) eingerichtet ist, beide Szenenanalyseverfahren (44, 46) auf alle Bilder der Szene anzuwenden.

12. Vorrichtung nach Anspruch 10 oder 11, **dadurch gekennzeichnet, dass** sie wenigstens eine dritte Bildaufnahmeeinheit (22) zum Aufnehmen eines dritten Bildes des Gefahrenbereichs (58) umfasst, und dass die Auswerteeinheit (14) eingerichtet ist, wenigstens eines der zwei Szenenanalyseverfahren auf die wenigstens drei Bilder anzuwenden.

13. Vorrichtung nach einem der vorhergehenden Ansprüche, **dadurch gekennzeichnet, dass** wenigstens zwei der Bildaufnahmeeinheiten (16, 18) in einem gemeinsamen Gehäuse angeordnet sind.

14. Vorrichtung nach einem der vorhergehenden Ansprüche, **dadurch gekennzeichnet, dass** die Auswerteeinheit (14) so ausgebildet ist, dass sie eine dreidimensionale Beschreibung der Szene durch Minimierung aus einer aus allen Bildern simultan zu bestimmenden Zielfunktion ermittelt.

## Claims

1. A method for safeguarding a hazardous area (58) of a robot (60), wherein at least two images of the hazardous area (58) are recorded with the aid of at least a first and a second image recording unit (16, 18), the image recording units (16, 18) being arranged offset from one another, and wherein foreign objects (66) in the hazardous area (58) are detected with the aid of a scene analysis (44, 46) of the images, **characterized in that** the scene analysis is carried out on the basis of the at least two images using at least two algorithmically different three-dimensional scene analysis methods (46, 44), which are carried out in parallel on the basis of the at least two images, such that a combination of various three-dimensional scene analysis methods is provided, with a warning zone (62) and a protection zone (64) being defined in the hazardous area (58), and with the hazardous area (58) being safeguarded when at least one of the three-dimensional scene analysis methods (44, 46) detects a foreign object in the warning zone (62) or the protection zone (64), wherein the three-dimensional scene analysis methods (44, 46) comprise additional algorithms, by means of which a movement direction and a speed of a foreign object (66) can be detected, and wherein the warning zone (62) and the protection zone (64) are defined adaptively around the robot (60) in dependence thereon.

2. The method of claim 1, **characterized in that** one of the methods (46, 44) for scene analysis comprises a correlation-based scene analysis (44), and the other one comprises a contour-based scene analysis (46).

3. The method of claim 2, **characterized in that** at least one of the methods (46, 44) processes only such image regions that differ significantly from a reference image.

4. The method of anyone of claims 1 to 3, **characterized in that** the images of the scene are recorded by at least three image recording units (16, 18, 22) that are not arranged in line.

5. The method of claim 4, **characterized in that** the at least three images are interpreted as at least two image pairs that have an image in common in each case.

6. The method of anyone of the preceding claims, **characterized in that** both scene analysis methods are applied to all the images.

7. The method of anyone of the preceding claims, **characterized in that** a number of temporally successive groups of at least two images are evaluated in order to determine at least one movement parameter of a detected foreign object.

8. The method of anyone of the preceding claims, **characterized in that** a future exposure time of each image recording unit (16, 18, 22) is set as a function of the image recorded by it.

9. The method of anyone of the preceding claims, **characterized in that** a three-dimensional representation of the scene is established by minimizing a target function to be determined from all the images simultaneously.

10. A device for safeguarding a hazardous area (58) of a robot (60), comprising at least a first and a second image recording unit (16, 18) for recording at least two images of the hazardous area (58), the image recording units (16, 18) being arranged offset from one another, and comprising an evaluation unit (14) that detects foreign objects (66) in the hazardous area (58) with the aid of a scene analysis (44, 46) of these images, **characterized in that** the evaluation unit (14) is designed for carrying out the scene analysis using at least two algorithmically different three-dimensional scene analysis methods (46, 44), which are carried out in parallel on the basis of the at least two images, such that a combination of various three-dimensional scene analysis methods is provided, with a warning zone (62) and a protection zone (64) being defined in the hazardous area (58), and, furthermore, a switching means (24) is implemented that is activated when at least one of the three-dimensional scene analysis methods (44, 46) detects a foreign object in the warning zone (62) or the protection zone (64), wherein the three-dimensional scene analysis methods (44, 46) comprise additional algorithms, by means of which a movement direction and a speed of a foreign object (66) can be detected, and wherein the warning zone (62) and the protection zone (64) are defined adaptively around the robot (60) in dependence thereon.

11. The device of claim 10, **characterized in that** the evaluation unit (14) is set up to apply both scene analysis methods (44, 46) to all the images of the scene.

12. The device of claim 10 or 11, **characterized by** at least a third image recording unit (22) for recording a third image of the hazardous area (58), the evaluation unit (14) being set up to apply at least one of the two scene analysis methods to the at least three images.

13. The device of anyone of the preceding claims, **characterized in that** at least two of the image recording units (16, 18) are arranged in a common housing.

14. The device of anyone of the preceding claims, **characterized in that** the evaluation unit (14) is designed for establishing a three-dimensional representation of the scene by minimizing a target function to be determined from all images simultaneously.

## Revendications

1. Procédé pour sécuriser une zone de risque (58), d'un robot (60), dans lequel au moins une première et une deuxième unité de prise de vue (16, 18) enregistrent au moins deux vues de la zone de risque (58), les unités de prise de vue (16, 18) étant agencées en décalage l'une par rapport à l'autre, et dans lequel des objets étrangers (66) dans la zone de risque (58) sont détectés à l'appui d'une analyse de la scène (44, 46) des vues, **caractérisé en ce que** l'analyse de la scène est effectuée à l'appui desdites au moins deux vues en appliquant au moins deux procédés d'analyse de la scène (46, 44) en trois dimensions à algorithmes différents qui sont réalisés chacun en parallèle de l'autre à l'appui desdites au moins deux vues de sorte que façon à réaliser une combinaison de procédés d'analyse de la scène en trois dimensions, **en ce qu'**une zone d'avertissement (62) et une zone de protection (64) sont définies dans la zone de risque et **en ce que** la zone de risque (58) est sécurisée si au moins l'un des procédés d'analyse de la scène (44, 46) en trois dimensions délivre une détection d'objets étrangers dans la zone d'avertissement (62) ou la zone de protection (64), les deux procédés d'analyse de la scène (44, 46) en trois dimensions contenant des algorithmes supplémentaires, à l'aide desquels un sens de déplacement et une vitesse d'un objet étranger (66) peuvent être identifiés, et la zone de précaution (62) et la zone d'avertissement (64) étant définies de manière adaptative en fonction de ceux-ci autour du robot (60).

2. Procédé selon la revendication 1, **caractérisé en ce que** l'un des procédés (46, 44) pour l'analyse de la scène comporte une analyse de scène (44) basée sur la corrélation et l'autre comporte une analyse de scène (46) basée sur le contour.

3. Procédé selon la revendication 2, **caractérisé en ce qu'**au moins l'un des procédés (46, 44) ne traite que les zones de vue qui se différencient de manière significative d'une vue de référence.

4. Procédé selon l'une quelconque des revendications 1 à 3, **caractérisé en ce que** les vues de la scène sont enregistrées par au moins trois unités de prise de vue (16, 18, 22), qui ne sont pas agencées en ligne.

5. Procédé selon la revendication 4, **caractérisé en ce que** lesdites au moins trois vues sont prises sous forme d'au moins deux paires de vues, qui contiennent chacune une vue en commun.

6. Procédé selon l'une quelconque des revendications précédentes, **caractérisé en ce que** les deux procédés d'analyse de scène sont appliqués à toutes les vues.

7. Procédé selon l'une quelconque des revendications précédentes, **caractérisé en ce que** plusieurs groupes chronologiques contenant au moins deux vues sont évalués pour déterminer au moins un paramètre de mouvement d'un objet étranger détecté.

8. Procédé selon l'une quelconque des revendications précédentes, **caractérisé en ce qu'**un futur temps de pose pour chaque unité de prise de vue (16, 18, 22) est réglé en fonction de la vue enregistrée par ladite unité.

9. Procédé selon l'une quelconque des revendications précédentes, **caractérisé en ce qu'**une description tridimensionnelle de la scène est établie par minimisation à partir d'une fonction cible à déterminer simultanément à partir de toutes les vues.

10. Dispositif pour sécuriser une zone de risque (58) d'un robot (60), comportant au moins une première et une deuxième unité de prise de vue (16, 18) destinées à enregistrer au moins deux vues de la zone de risque (58), les unités de prise de vue (16, 18) étant agencées en décalage l'une par rapport à l'autre, et comportant une unité d'évaluation (14) qui, à l'appui d'une analyse de la scène (44, 46) desdites vues, détecte des objets étrangers (66) dans la zone de risque (58), **caractérisé en ce que** l'unité d'évaluation (14) est réalisée de telle sorte que l'analyse de la scène soit effectuée en appliquant au moins deux procédés d'analyse de scène (46, 44) en trois dimension à algorithmes différents qui sont réalisés chacun en parallèle de l'autre à l'appui desdites au moins deux vues de façon à réaliser une combinaison différents procédés d'analyse de la scène en trois dimensions, **en ce qu'**une zone d'avertissement (62) et une zone d'avertissement (64) sont définies, et **en ce qu'**un moyen de commutation (24) est en outre implémenté, lequel est activé lorsqu'au moins l'un des procédés d'analyse de scène (46, 44) en trois dimensions délivre une détection d'objets étrangers dans la zone d'avertissement (62) ou la zone de protection (64), les deux procédés d'analyse de la scène (44, 46) en trois dimensions contenant des algorithmes supplémentaires, à l'aide desquels un sens de déplacement et une vitesse d'un objet étranger (66) peuvent être identifiés, et la zone de précaution (62) et la zone de protection (64) étant définies de manière adaptative en fonction de ceux-ci autour du robot (60).

11. Dispositif selon la revendication 10, **caractérisé en ce que** l'unité d'évaluation (14) est conçue pour appliquer les deux procédés d'analyse de scène (46, 44) à toutes les vues de la scène.

12. Dispositif selon la revendication 10 ou 11, **caractérisé en ce qu'**il comporte au moins une troisième unité de prise de vue (22) destinée à enregistrer une troisième vue de la zone de risque (58), et **en ce que** l'unité d'évaluation (14) est conçue pour appliquer au moins l'un des deux procédés d'analyse de scène auxdites au moins trois vues.

13. Dispositif selon l'une quelconque des revendications précédentes, **caractérisé en ce qu'**au moins deux des unités de prise de vue (16, 18) sont agencées dans un boîtier commun.

14. Dispositif selon l'une quelconque des revendications précédentes, **caractérisé en ce que** l'unité d'analyse (14) est réalisée de sorte à établir une description tridimensionnelle de la scène par minimisation à partir d'une fonction cible à déterminer simultanément à partir de toutes les vues.
